Europäisches Patentamt

European Patent Office

Office européen des brevets

(11) Numéro de publication: **0 081 401**
**B1**

## FASCICULE DE BREVET EUROPEEN

(45) Date de publication du fascicule du brevet: **18.03.87**

(51) Int. Cl.⁴: **B 64 G 1/66**

(21) Numéro de dépôt: **82402002.8**

(22) Date de dépôt: **28.10.82**

(54) **Système permettant le maintien temporaire et la libération de deux parties, plus particulièrement dans le domaine spatial.**

(30) Priorité: **26.11.81 FR 8122144**

(43) Date de publication de la demande:
**15.06.83 Bulletin 83/24**

(45) Mention de la délivrance du brevet:
**18.03.87 Bulletin 87/12**

(84) Etats contractants désignés:
**AT BE CH DE GB IT LI NL SE**

(56) Documents cités:
**DE-A-2 853 070**
**DE-A-3 018 245**

(73) Titulaire: **SOCIETE NATIONALE INDUSTRIELLE AEROSPATIALE Société dite:**
**37 Boulevard de Montmorency**
**F-75781 Paris Cedex 16 (FR)**

(72) Inventeur: **Vezain, Gérard**
**Domaine de Maure-Vieil Villa 137**
**F-06210 Mandelieu (FR)**
Inventeur: **Vermalle, Jean-Claude**
**893, Rue Janvier Passero La Chartreuse**
**F-06210 Mandelieu (FR)**

(74) Mandataire: **Rinuy, Guy et al**
**Cabinet Rinuy et Santarelli 14, Avenue de la Grande Armée**
**F-75017 Paris (FR)**

## Description

La présente invention concerne un système de maintien et de libération permettant d'assurer une liaison temporaire entre deux parties qui doivent être séparées l'une de l'autre au cours de leur utilisation propre.

C'est ainsi que, dans le cas d'un véhicule spatial, la liaison doit assurer temporairement le positionnement et la transmission des efforts de la partie supportée pendant les différentes phases de mise en configuration opérationnelle du véhicule, comme par exemple durant la phase de lancement du véhicule ou la phase de déploiement des appendices; la libération doit, elle, autoriser la partie supportée qui a été libérée d'osciller par rapport à la position où elle a été maintenue.

D'une façon plus particulière, on sait que les exigences de pointage des antennes d'émission ou de réception de véhicules spatiaux imposent, pour certains véhicules, un dispositif de pointage d'antenne qui assure la fixité de couverture de l'antenne par une orientation de celle-ci qui a pour effet de compenser les écarts d'attitude du véhicule.

Plus particulièrement encore, le dispositif de pointage d'antennes qui fait l'objet du brevet EUROPEEN N° 0015829 au nom de la Demanderesse, comprend essentiellement:
— une partie liée rigidement au véhicule spatial;
— une partie mobile porteuse sur laquelle est fixée rigidement l'antenne;
— une liaison souple qui assujettit les deux parties ci-dessus par un point fixe, réel ou virtuel, en configuration opérationnelle.

Par la rotation autour de deux axes orthogonaux, le dispositif de pointage assure l'orientation de la partie mobile porteuse de l'antenne afin d'assurer la couverture requise.

Toutefois, la mise à poste en configuration opérationnelle impose l'immobilisation relative temporaire entre les deux parties, laquelle ne peut être effectuée par le dispositif de pointage lui-même.

La présente invention concerne un système de maintien et de libération permettant d'assurer:
— l'immobilisation de la partie mobile dans une position bien précise — puisque, pour raison de fiabilité, la position de l'antenne pour la configuration de lancement doit permettre son utilisation dans un mode dégradé correspondant à la position nominale sans correction des écarts d'attitude,
— la libération de ladite partie mobile avec la possibilité pour celle-ci d'osciller de part et d'autre de la position moyenne qui est celle de la position d'immobilisation de lancement.

On connaît déjà, d'après le document DE—A—2.853.070, un système de maintien et de libération permettant d'assurer une liaison temporaire entre deux parties qui doivent être séparées l'une de l'autre pour leur utilisation propre. Ce document concerne le stockage temporaire d'éléments déployables tels que des panneaux solaires pour véhicules spatiaux. Il y est proposé une tige de retenue qui maintient ces éléments déployables contre un appui fixe; il n'y a aucune possibilité d'oscillation de ces éléments de part et d'autre de leur position de stockage. Les enseignements de ce document ne permettent donc pas de répondre au problème technique précité que l'invention vise à résoudre. Il en est de même du certificat d'addition DE—A—3.018.245 à ce document allemand, qui n'a été publié que le jour même de la priorité de la présente demande.

L'invention propose ainsi un système de maintien et de libération permettant d'assurer une liaison temporaire entre deux parties qui doivent être séparées l'une de l'autre pour leur utilisation propre, plus particulièrement dans le cadre d'une application sur un véhicule spatial, du genre comportant une pluralité de dispositifs élémentaires dont chacun comprend:
— un pied de support lié à la partie fixe,
— un élément formant appui pour la partie mobile,
— un élément de retenue admettant une configuration de verrouillage dans laquelle son extrémité libre vient porter sur une face de la partie mobile, en regard et à l'opposé de l'appui, ce qui provoque l'immobilisation de la partie mobile dans une position bien précise, ainsi qu'une configuration d'effacement qui libère la partie mobile,
— une gâchette articulée sur le pied ayant la fonction de bloquer indirectement l'élément de retenue en configuration de verrouillage,
— un dispositif de commande pour libérer la gâchette de sa fonction de blocage, et
— des moyens pour provoquer automatiquement le déplacement de l'élément de retenue à partir de sa configuration de verrouillage,
ce système étant caractérisé par rapport au document DE—A—2.853.070 en ce que, dans chacun des dispositifs élémentaires, l'élément formant appui est mobile, étant articulé sur une extrémité d'une biellette formant balancier articulée en sa partie médiane sur le pied, tandis que l'élément de retenue est un étrier de gerbage articulé sur l'autre extrémité de la biellette, cette biellette étant susceptible d'occuper soit une position de verrouillage dans laquelle elle est bloquée par la gâchette et dans laquelle l'étrier est en configuration de verrouillage, soit une position de libération, sous l'action desdits moyens de déplacement de l'étrier, dans laquelle l'étrier et l'appui mobile se trouvent, l'un et l'autre, dans une position d'effacement, autorisant ainsi des oscillations de la partie mobile de part et d'autre de sa position d'immobilisation.

D'autres caractéristiques, avantages et particularités de la présente invention ressortiront de la description qui en est donnée ci-après en référence aux dessins annexés représentant, schématiquement et simplement à titre d'exemple, différentes formes de réalisation possibles de ladite invention.

Sur ces dessins:

la figure 1 est une vue de détail représentant, en élévation avec coupe partielle, une première forme de réalisation possible d'un dispositif de maintien conforme à l'invention, ce dernier étant en configuration d'immobilisation de l'élément mobile,

la figure 2 est une vue analogue à la précédente mais le dispositif étant représenté, cette fois, en configuration de libération de l'élément mobile,

la figure 3 est une vue de dessus du dispositif avec coupe partielle montrant les deux positions possibles de la gâchette de commande,

la figure 4 est un schéma à plus petite échelle montrant la répartition possible sur l'élément fixe de trois dispositifs de maintien de l'élément mobile, leurs gâchettes respectives étant maintenues en position verrouillée par un câble de gerbage commun,

la figure 5 est un schéma explicatif permettant de montrer comment peut s'opérer la transmission des efforts dans le plan des trois points de maintien de la figure 4, étant à noter que l'un des trois points de maintien est conforme au schéma de la figure 6, le deuxième à celui de la figure 7 et le troisième à celui de la figure 8,

la figure 9 est un schéma explicatif d'une variante dans laquelle la transmission des efforts est assurée par friction, et

les figures 10, 11 et 12 sont des figures analogues aux figures 1, 2 et 3 représentant une variante de réalisation du dispositif dans laquelle les charges induites dans le câble de gerbage sont limitées par un relais mécanique.

On rappellera tout d'abord brièvement que la présente invention concerne un dispositif au double rôle d'immobilisation temporaire et de libération d'une partie mobile porteuse par rapport à une partie fixe du véhicule.

Plus particulièrement, le dispositif suivant l'invention permet d'assurer:
— le maintien d'une partie mobile dans une position déterminée;
— la fidélité de positionnement après plusieurs essais de libération;
— la transmission des efforts de la partie supportée, durant les différentes phases de mise à poste du satellite;
— la libération de la partie mobile ainsi que l'autorisation pour celle-ci d'osciller autour de la position moyenne correspondant à la position de lancement;
— une probabilité de fonctionnement élevée.

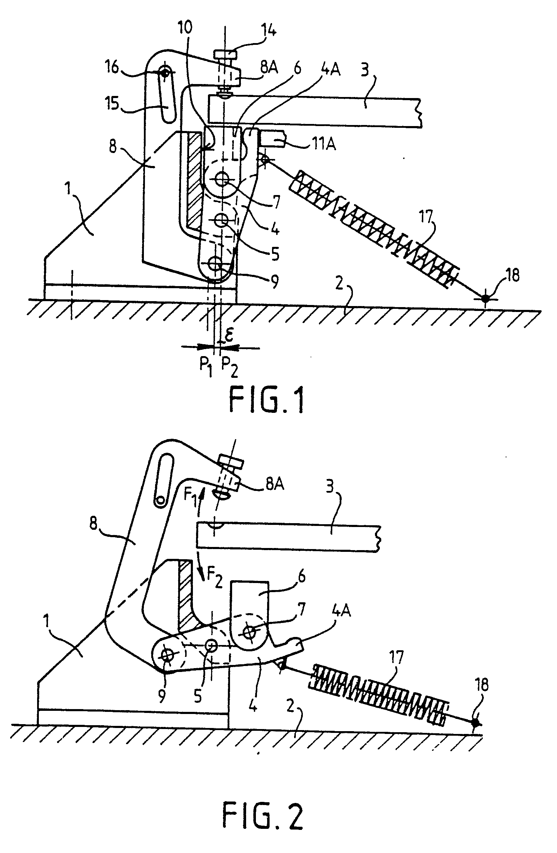

En se reportant tout d'abord aux figures 1, 2 et 3, on voit que le dispositif de maintien et de libération selon l'invention est essentiellement constitué: d'un pied 1 fixé par tout moyen approprié sur la partie adéquate 2 du satellite pour que le dispositif puisse participer à l'immobilisation d'une partie mobile 3 dans une position bien déterminée durant les différentes phases de mise à poste du satellite; d'une biellette 4 articulée en sa partie médiane, sur un axe transversal 5 du pied 1; cette biellette faisant office de balancier; d'un appui mobile 6 articulé à l'une des extrémités de la biellette 5 sur un axe transversal 7;

d'un étrier de gerbage en forme de C, 8, articulé à son extrémité inférieure (sur le dessin) sur un axe 9 fixé à la deuxième extrémité de la biellette 4. La biellette 4 peut occuper deux positions possibles qui sont représentées, respectivement, sur la figure 1 qui est la configuration gerbée ou d'immobilisation de la partie mobile 3 dans sa position moyenne correspondant à la phase de lancement du missile et sur la figure 2 qui est la configuration libérée dans laquelle la partie mobile 3 est libre d'osciller dans le sens $F_1$ ou le sens $F_2$ autour de la position moyenne de lancement de la figure 1.

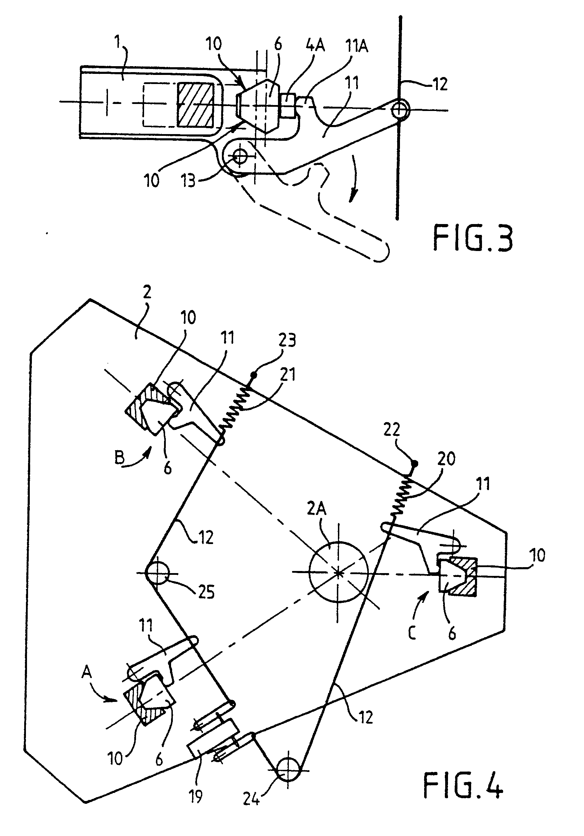

D'une façon plus particulière, la biellette 4, en configuration de lancement se trouve maintenue en position sensiblement verticale (sur le dessin) à l'aide d'une gâchette 11 immobilisée elle-même en cette position de blocage par un câble de gerbage 12 (figure 3) sur lequel on reviendra en détail plus loin. Pour obtenir ce blocage de la biellette 4, la gâchette 11, qui s'articule sur un axe vertical 13 solidaire du pied 1 est munie d'une tête $11_A$ venant prendre appui sur un épaulement $4_A$ de la biellette 4.

Dans cette configuration de lancement, l'appui mobile 6 articulé sur la biellette 4 se trouve immobilisé en position verticale, contre le pied 1 dans un logement en forme de Vé 10 dont est muni ledit pied, par l'intermédiaire de la biellette 4 elle-même bloquée par la gâchette 11. Comme cela apparaît distinctement sur la figure 3, l'appui mobile 6 a une section transversale complémentaire de celle du logement 10 du pied 1.

Toujoursdans cette même configuration de lancement, l'étrier de gerbage 8 en forme de C assure l'effort de maintien de la partie mobile 3 sur l'appui mobile 6. A cet effet, l'extrémité supérieure $8_A$ du levier 8 est munie d'une vis de mise en tension 14 venant porter sur la face supérieure de l'élément mobile 3. Cette vis permet d'obtenir l'effort de serrage requis. Le contrôle de cette tension peut avantageusement être effectué par des jauges de contraintes collées sur l'étrier et préalablement étalonnées dans la gamme d'effort à appliquer.

Suivant une autre caractéristique de l'invention qui apparaît distinctement sur la figure 1, l'axe géométrique de l'axe 9 sur lequel s'articule le pied de l'étrier 8 est contenu dans un plan $P_1$ décalé d'un intervalle $\varepsilon$ du plan vertical $P_2$ dans lequel sont contenus les axes géométriques de l'axe d'articulation 5 de la biellette 4 et de l'axe d'articulation 7 de l'appui mobile 6.

Il ressort de cette caractéristique qu'après la commande de sectionnement du câble de gerbage 12 sur laquelle on reviendra en détail plus loin et qui a pour effet d'amener la gâchette 11 de la positon de gerbage représentée en trait plein sur la figure 3 à la position de libération représentée en trait interrompu sur cette même figure, le couple de déverrouillage, engendré par l'effort de serrage de l'étrier 8 sur la partie mobile 3 (grâce à la vis de mise en tension 14) avec le bras de levier correspondant au décalage de l'axe 9 par rapport à l'axe 5, provoque la rotation de la biellette 4 dans le sens dextrogyre autour de son axe 5. Cette rotation de la biellette 4 a pour effet de provoquer le double effacement: de l'appui mobile 6 vers le bas et de l'étrier 8 vers le haut et de libérer ainsi l'élément mobile 3.

Durant ce pivotement de la biellette 4, l'étrier 8 est maintenu sur une trajectoire imposée par une fente 15 dont il est pourvu, coulissant contre un pion de guidage fixe 16.

Sur la forme de réalisation représentée sur les figures 1 à 3, l'appui mobile 6 est articulé librement sur la biellette 4 autour de l'axe 7 mais il est bien évident que si un impératif fonctionnel l'exige, il est possible de lui assurer un guidage identique à celui de l'étrier.

Par ailleurs, un ressort de rappel 17 fixé entre la biellette 4 et un point fixe 18 assure un effacement complet ainsi que l'immobilisation tant de la biellette 4 que de l'étrier 8 pour les assurer dans les positions relatives de la configuration de libération de la figure 2.

On se référera maintenant au schéma de la figure 4 montrant la répartition possible triangulaire sur un élément fixe 2 de trois dispositifs de maintien désignés par les références générales A, B et C de la partie mobile (non représentée).

Par mesure de simplification, chacun des dispositifs A, B et C est schématisé par son appui mobile 6, en position haute, la partie en Vé formant butée 10 de son pied et sa gâchette de libération 11. Sur le câble de gerbage 12, maintenant les trois gâchettes 11 en position verrouillée, est inséré en un endroit approprié, une cisaille pyrotechnique 19 d'un type quelconque connu, tandis que deux ressorts de rappel 20 et 21 sont fixés, respectivement, entre les deux extrémités libres du câble de gerbage 12 et deux points fixes 22 et 23. Enfin des poulies de renvoi 24 et 25 assurent une parfaite orientation du câble 12 pour maintenir les gâchettes 11 en position de verrouillage.

Il apparaît immédiatement que le sectionnement du câble de gerbage 12 par la cisaille pyrotechnique 19 assure la libération simultanée des trois dispositifs de maintien A, B et C.

La rotation des gâchettes 11 sous l'action des ressorts de rappel 21 et 22 et l'autoréversibilité de chacun des dispositifs de maintien A, B et C, pour les raisons qui ont été décrites précédemment, provoquent, pour chacun desdits dispositifs A, B et C, l'effacement complet tant de l'étrier 8 que de l'appui mobile 6 et, partant, la libération de l'élément mobile 3 qui peut alors osciller autour de sa position moyenne dans laquelle il était alos immobilisé.

L'intérêt majeur de la présente invention réside en le fait que l'immobilisation de la partie mobile 3 s'effectue dans une position moyenne précise, ce qui permet d'éliminer toute contrainte sur les mécanismes d'orientation de ladite partie mobile en position opérationnelle du satellite.

C'est ainsi, en particulier, que, dans le cas d'application de l'invention à un système de pointage d'une antenne, la partie mobile porteuse de l'antenne peut être liée à la partie fixe 2 du satellite par un dispositif d'assujettissement, par exemple mécanique, et consistant en un cylindre mince en une matière élastique ajourée selon sa face frontale de lumières concentriques en secteurs alternés, ce cylindre étant schématisé en $2_A$ sur la figure 4. Cette liaison mécanique permettant tout à la fois d'empêcher l'apparition de contraintes sur les mécanismes d'orientation de l'antenne en phase de lancement et au contraire leur fonctionnement en phase de libération pour assurer l'orientation de la partie mobile dans la direction voulue durant la phase opérationnelle.

D'une façon générale, l'application de l'invention est par suite particulièrement intéressante pour tout instrument exigeant par exemple:

— un basculement pour pointage fin en poste opérationnel;

— le lancement dans une position définie précise;

— ou pour des instruments de prises de vue, des détecteurs, des senseurs.

L'invention présente encore d'autres avantages, notamment en ce qui concerne la transmission des efforts durant la phase de lancement qui constitue un problème important à résoudre.

Durant cette phase, on voit immédiatement de la description qui a été faite que les efforts qui s'exercent perpendiculairement au plan formé par les trois dispositifs de maintien sont repris intégralement par les étriers et les appuis mobiles desdits dispositifs.

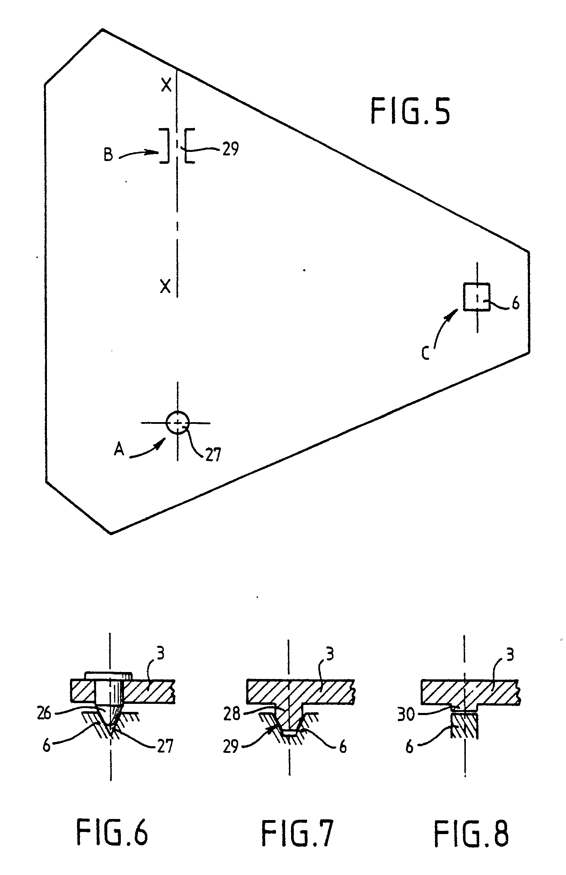

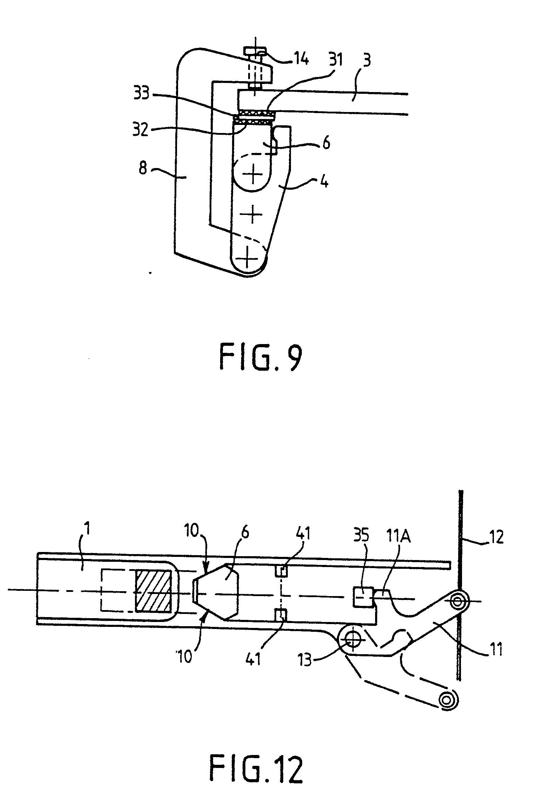

En ce que concerne les efforts survenant dans le plan des trois dispositifs de maintien, ou peut les transmettre conformément à l'invention, soit suivant le principe schématisé sur les figures 5, 6, 7 et 8, soit suivant le principe schématisé sur la figure 9.

Suivant le principe des figures 5 à 8, on procède comme suit:

— un des trois points de maintien, le dispositif A par exemple, assure la transmission à l'aide d'un pion conique 26 solidaire de la partie mobile 3 et son logement 27 pratiqué dans l'appui mobile 6 correspondant;

— un deuxième point de maintien, le dispositif B par exemple, assure l'orientation de la partie mobile 3 à l'aide d'un tenon 28 solidaire de ladite partie mobile 3 logé dans une glissière 29 pratiquée dans l'appui mobile 6 correspondant, dont l'axe XX passe par le centre du pion conique 26;

— le troisième point de maintien, en l'occurrence le dispositif C, est constitué par un simple appui d'un tenon 30 solidaire de l'élément mobile 3 sur l'appui mobile 6 correspondant.

Cette solution présente l'avantage d'assurer le passage des efforts dans le plan horizontal (sur le dessin) ainsi que le repositionnement précis à chaque gerbage.

Suivant le principe de la figure 9, la transmission des efforts dans le plan horizontal est assurée par friction.

A cet effet, sur chaque point de maintien, la partie mobile 3 et l'appui mobile 6 comportent une surface rugueuse constituée par des pointes en forme de pyramide 31 pour la première et 32 pour le deuxième, le contact entre ces deux surfaces rugueuses étant obtenu par une cale métallique intermédiaire 33 dont la malléabilité est déterminée à la demande.

L'effort de serrage de l'étrier est fonction du coefficient de frottement déterminé par essai.

L'étrier 8 se comporte comme un ressort, ce qui permet de garantir un effort de serrage minimum indispensable pour la transmission des efforts dans le plan horizontal.

Il est à noter que ce principe de transmission des efforts par friction ne garantit pas un positionnement aussi précis que le précédent et qu'il nécessite par ailleurs un outillage de positionnement pour effectuer le gerbage de la partie mobile. Par contre, le nombre des points de maintien peut être augmenté très aisément.

Les deux principes de passage d'efforts dans le plan décrits ci-dessus ont évidemment, chacun, un domaine d'application bien particulier et complémentaire qui est fonction, notamment, de l'exigence de précision.

Par ailleurs, il est important de noter que l'effort de précontrainte de l'étrier ainsi que le décalage de son axe d'articulation provoquent l'auto-déverrouillage du mécanisme ce qui apporte un maximum de fiabilité du dispositif. De plus, le ressort de rappel de la biellette apporte une sécurité complémentaire de fonctionnement.

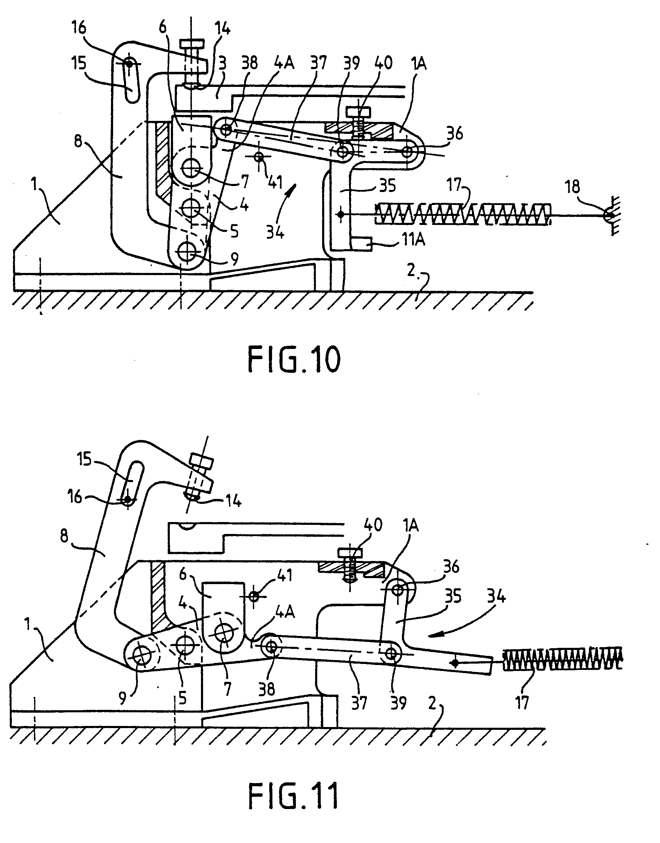

Dans le but de limiter les charges induites dans le câble de gerbage, lesquelles charges peuvent, en certains cas, limiter les possibilités mêmes des dispositifs de maintien et de libération actionnés par un câble de gerbage commun, on peut avantageusement adopter la variante de réalisation représentée à titre d'exemple sur les figures 10 à 12.

Le dispositif de maintien et de libération proprement dit est rigoureusement identique à celui des figures 1, 2 et 3 et, afin de ne pas surcharger inutilement la description, on ne le décrira pas de nouveau. On a pris soin de reporter sur les figures 10, 11 et 12 les mêmes références que celles utilisées sur les figures 1, 2 et 3 pour désigner les éléments identiques.

La caractéristique essentielle de la variante de réalisation des figures 10 à 12 réside en l'agencement, entre la biellette 4 et la gâchette 11, d'un relais mécanique portant la référence générale 34 qui a pour effet d'assurer une démultiplication propice à la limitation des charges induites dans le câble de gerbage 12.

Le relais mécanique 34 représenté à titre d'exemple sur les figures 10 à 12 est constitué essentiellement: d'un levier de verrouillage 35 en forme d'équerre, articulé à son extrémité libre supérieure sur un axe 36 solidaire, d'un épaulement $1_A$ du pied 1 et dont l'extrémité libre inférieure sert d'appui à l'épaulement $11_A$ de la gâchette 11 en position de gerbage; d'une barrette de liaison 37 s'articulant, à l'une de ses extrémités, sur un axe 38 solidaire de l'épaulement d'extrémité $4_A$ de la biellette 4 et à son autre extrémité sur un axe 39 agencé dans l'angle droit du levier de verrouillage 35; et d'une vis butée 40 montée sur l'épaulement $1_A$ du pied 1 et qui vient porter (voir figure 10) sur la partie sensiblement horizontale du levier de verrouillage 35 comprise entre les axes d'articulation 36 et 39, cette vis butée 40 permettant d'assurer le réglage de la réversibilité du système, par modification de la distance de l'axe géométrique de l'axe d'articulation 39 à la ligne virtuelle reliant les axes géométriques des axes d'articulation extrêmes 36 et 38.

Il y a lieu de noter que le ressort de rappel 17 qui était fixé entre un point 18 de la partie fixe 2 et un point sur l'extrémité libre de la biellette 4, dans la forme de réalisation des figures 1 et 2, est ici fixé entre un point 18 de la partie fixe 2 et un point sur l'extrémité libre inférieure du levier de verrouillage 35.

On constate immédiatement à la lecture des figures 10, 11 et 12, que l'on peut régler, grâce à la vis butée 40 et aux rapports entre les différents bras de levier, la valeur des charges induites dans le câble de gerbage 12 à la valeur compatible avec le fonctionnement parfait du système.

Une butée 41 peut avantageusement être prévue pour immobiliser l'appui mobile 6 dans une position parfaitement définie en la configuration déployée de la figure 11.

## Revendications

1. Système de maintien et de libération permettant d'assurer une liaison temporaire entre deux parties (2, 3) qui doivent être séparées l'une de l'autre pour leur utilisation propre, plus particulièrement dans le cadre d'une application sur un véhicule spatial, du genre comportant une pluralité de dispositifs élémentaires (A, B, C) dont chacun comprend:

— un pied de support (1) lié à la partie fixe (2),

— un élément formant appui (6) pour la partie mobile (3),

— un élément de retenue (8) admettant une configuration de verrouillage dans laquelle son extrémité libre ($8_A$) vient porter sur une face de la partie mobile (3), en regard et à l'opposé de l'appui (6), ce qui provoque l'immobilisation de la partie mobile dans une position bien précise, ainsi qu'une configuration d'effacement qui libère la partie mobile,

— une gâchette (11) articulée (13) sur le pied (1) ayant la fonction de bloquer indirectement l'élément de retenue (8) en configuration de verrouillage,

— un dispositif de commande (12) pour libérer la gâchette (11) de sa fonction de blocage, et

— des moyens (17, 14, ε) pour provoquer automatiquement le déplacement de l'élément de retenue à partir de sa configuration de verrouillage,

ce système étant caractérisé en ce que, dans chacun des dispositifs élémentaires (A, B, C), l'élément (6) formant appui est mobile, étant articulé sur une extrémité (7) d'une biellette formant balancier (4) articulée en sa partie médiane (5) sur le pied, tandis que l'élément de retenue est un étrier de gerbage (8) articulé sur l'autre extrémité (9) de la biellette (4), cette biellette étant susceptible d'occuper soit une position de verrouillage dans laquelle elle est bloquée par la gâchette (11) et dans laquelle l'étrier est en configuration de verrouillage, soit une position de libération, sous l'action desdits moyens (14, 17, ε) de déplacement de l'étrier, dans laquelle l'étrier et l'appui mobile se trouvent, l'un et l'autre, dans une position d'effacement, autorisant ainsi des oscillations de la partie mobile (2) de part et d'autre de sa position d'immobilisation.

2. Système selon la revendication 1, caractérisé par le fait que les moyens pour provoquer automatiquement le pivotement de la biellette de sa position de verrouillage à sa position de libération sont constitués d'une vis de mise en tension (14) montée sur l'extrémité libre (8$_A$) de l'étrier de gerbage (8) et venant porter sur la partie mobile (3) en assurant une précontrainte, combinée avec un décalage (ε) de l'axe d'articulation (9) de l'étrier (8) sur la biellette (4) par rapport à l'axe d'articulation (5) de la biellette (4) sur le pied (1), ces moyens assurant l'autoréversibilité du système et étant avantageusement complétés par un système de rappel élastique (17) de la biellette (4) vers sa position de libération.

3. Système selon l'une quelconque des revendications 1 ou 2, caractérisé par le fait que le dispositif de commande pour libérer la gâchette (11) de sa fonction de blocage est constitué par un câble de gerbage (12) à ressort de rappel (20, 21) et à cisaille pyrotechnique de commande (19).

4. Système selon l'une quelconque des revendications 1 à 3, caractérisé par le fait que le système comporte au moins trois dispositifs élémentaires (A, B, C) repartis au sommet d'un triangle dont les appuis mobiles (6) déterminent un plan de support de la partie mobile (3), les gâchettes (11) des dispositifs élémentaires étant maintenues en position de blocage par un câble de gerbage commun (12) dont les extrémités libres sont soumises à des ressorts de rappel (20, 21), et comportant une cisaille pyrotechnique de commande (19).

5. Système selon l'une quelconque des revendications 3 ou 4, caractérisé par le fait que, dans le but de limiter les charges induites dans le câble de gerbage (12) commandant les gâchettes (11), est agencé entre la biellette (4) et la gâchette (11) de chaque dispositif, un relais mécanique (34) ayant pour effet d'assurer une démultiplication.

6. Système selon la revendication 5, caractérisé par le fait que le relais mécanique est constitué d'un levier de verrouillage en forme d'équerre (35) articulé (36) sur le pied (1$_A$) et relié par une barrette de liaison (37) à la biellette (4), la gâchette (11) portant contre l'extrémité libre du levier de verrouillage (35), tandis qu'une bis butée (40) permet d'assurer le réglage de la réversibilité du système.

7. Système selon la revendication 4, caractérisé par le fait que sont prévus trois dispositifs de maintien (A, B, C) qui assurent la transmission des efforts dans le plan de maintien par le fait que l'un des trois points comporte un pion conique (26) dans la partie mobile (3) et dont le logement (27) est pratiqué sur l'appui mobile (6) correspondant, un deuxième des trois points comporte un tenon (28) sur la partie mobile (3) logé dans une glissière (29) pratiquée dans l'appui mobile correspondant (6) et dont l'axe (XX) passe par le centre du pion conique (26) et le troisième point comporte un appui simple de la partie mobile (3) sur l'appui mobile (6) correspondant.

8. Système selon la revendication 4, caractérisé par le fait que sont prévus un nombre de points d'appui supérieur à trois et que la transmission des efforts dans le plan de maintien est assurée par friction, la partie mobile (3) et l'appui mobile (6) correspondant comportant à cet effet une surface rugueuse (31, 32) et le contact étant obtenu par une cale métallique intermédiaire (33) à malléabilité déterminée à la demande.

## Patentansprüche

1. Festhalte- und Freigabesystem zur zeitweiligen Verbindung zweier Teile (2, 3), die, insbesondere bei Verwendung an einem Raumfahrzeug, voneinander für ihren jeweiligen Einsatz getrennt werden müssen, welches System jener Art ist, die eine Mehrzahl von Basiseinrichtungen (A, B, C) aufweist, deren jede:

— einen mit dem festen Teil (2) verbundenen Stützfuß (1),

— ein das Auflager für den beweglichen Teil (3) bildendes Element (6),

— ein Halteelement (8), das eine Verriegelungslage, in der sein freies Ende (8A) auf einer Seite des beweglichen Teiles (3) gegenüber und entgegengesetzt dem Auflager (6) zu liegen kommt, wodurch der bewegliche Teil in einer ganz bestimmten Stellung unbeweglich gehalten wird, sowie eine zurückgezogene Lage ermöglicht, die den beweglichen Teil freigibt,

— eine am Fuß (1) angelenkte (13) Zuhaltung (11) mit der Funktion der indirekten Blockierung des Halteelementes (8) in der Verriegelungslage,

— eine Betätigungseinrichtung (12) zur Freigabe der Zuhaltung (11) aus ihrer Blockierfunktion, und

— Mittel (17, 14, ε) zum automatischen Bewirken der Bewegung des Halteelementes ausgehend von seiner Verriegelungslage aufweist,

welches System dadurch gekennzeichnet ist, daß in jeder der Basiseinrichtungen (A, B, C) das das Auflager bildende Element (6) beweglich ist, wobei es an einem Ende (7) eines einen Schwinghebel (4) bildenden Schwingarmes angelenkt ist, der in seinem mittleren Teil (5) am Fuß angelenkt ist, während das Halteelement ein Zusammenhaltebügel (8) ist, der am anderen Ende (9) des Schwingarmes (4) angelenkt ist, wobei der Schwingarm sowohl eine Verriegelungsposition, in der er durch die Zuhaltung (11) blockiert ist und in der der Bügel in der Verriegelungslage ist, als auch, unter der Wirkung der genannten Mittel (14, 17, ε) zur Bewegung des Bügels, eine Freigabeposition einnehmen kann, in der sich der Bügel und das bewegliche Auflager beide in einer Zurückziehposition befinden, wodurch Schwingungen des beweglichen Teiles (3) nach beiden Seiten seiner Arretierposition erlaubt sind.

2. System nach Anspruch 1, dadurch gekennzeichnet, daß die Mittel zum automatischen Bewirken des Schwenkens des Schwingarmes aus seiner Verriegelungsposition in seine Freigabeposition aus einer Spannschraube (14), die an dem freien Ende (8A) des Zusammenhaltebügels (8) befestigt ist und unter Gewährleistung einer Vorspannung am beweglichen Teil (3) zur Anlage kommt in Kombination mit einer Verschiebung (ε) der Anlenkachse (9) des Bügels (8) am Schwingarm (4) relativ zur Anlenkachse (5) des Schwingarmes (4) am Fuß (1) bestehen, welche Mittel die Selbstumsteuerbarkeit des Systems gewährleisten und vorteilhafterweise durch ein System (17) zum elastischen Rückholen des Schwingarmes (4) in Richtung seiner Freigabeposition komplettiert sind.

3. System nach einem der Ansprüche 1 oder 2, dadurch gekennzeichnet, daß die Betätigungseinrichtung zur Freigabe der Zuhaltung (11) aus ihrer Blockierfunktion aus einem Zusammenhalteseil (12) mit einer Rückholfeder (20, 21) und einer pyrotechnischen Steuerungstrenneinrichtung (19) besteht.

4. System nach einem der Ansprüche 1 bis 3, dadurch gekennzeichnet, daß das System wenigstens drei Basiseinrichtungen (A, B, C) aufweist, die auf die Spitzen eines Dreieckes verteilt sind und deren bewegliche Auflager (6) eine Auflageebene des beweglichen Teiles (3) bestimmen, wobei die Zuhaltungen (11) der Basiseinrichtungen durch ein gemeinsames Zusammenhalteseil (12) in Blockierposition gehalten sind, dessen freie Enden der Wirkung von Rückholfedern (20, 21) unterworfen sind, und das eine pyrotechnische Steuerungstrenneinrichtung (19) aufweist.

5. System nach einem der Ansprüche 3 oder 4, dadurch gekennzeichnet, daß zur Verringerung der in das die Zuhaltungen (11) betätigende Zusammenhalteseil (12) eingeführten Belastungen zwischen dem Schwingarm (4) und der Zuhaltung (11) jeder Einrichtung ein mechanischer Umsetzer (34) angeordnet ist, der eine Untersetzung gewährleistet.

6. System nach Anspruch 5, dadurch gekennzeichnet, daß der mechanische Umsetzer aus einem winkelförmigen Verriegelungshebel (35) besteht, der am Fuß (1A) angelenkt (36) und durch eine Verbindungsstange (37) mit dem Schwingarm (4) verbunden ist, wobei die Zuhaltung (11) gegen das freie Ende des Verriegelungshebels (35) anliegt, während eine Anschlagschraube (40) die Regulierung der Umsteuerbarkeit des Systems gewährleistet.

7. System nach Anspruch 4, dadurch gekennzeichnet, daß drei Halteeinrichtungen (A, B, C) vorgesehen sind, die die Übertragung der Kräfte in der Festhalteebene dadurch gewährleisten, daß einer der drei Punkte einen Konusteil (26) im beweglichen Teil (3) aufweist, dessen Aufnahme (27) am entsprechenden beweglichen Auflager (6) vorgesehen ist, ein zweiter der drei Punkte am beweglichen Teil (3) einen Zapfen (28) aufweist, der in einer im entsprechenden beweglichen Auflager (6) vorgesehenen Führung (29) gelagert ist, deren Achse (XX) durch die Mitte des Konusteiles (26) geht, und der dritte Punkt ein einfaches Auflager des beweglichen Teiles (3) auf dem entsprechenden beweglichen Auflager (6) aufweist.

8. System nach Anspruch 4, dadurch gekennzeichnet, daß mehr als drei Auflagepunkte vorgesehen sind und daß die Übertragung der Kräfte in der Festhalteebene durch Reibung gewährleistet ist, wobei der bewegliche Teil (3) und das entsprechende bewegliche Auflager (6) zu diesem Zweck eine rauhe Fläche (31, 32) aufweisen und der Kontakt durch ein metallisches Zwischenlagestück (33) mit nach Wunsch vorbestimmter Geschmeidigkeit erzielt wird.

## Claims

1. Retention and release system enabling a temporary connection to be effected between two parts (2, 3) which must be separated one from the other for their proper use, more particularly in the context of application to a space vehicle of the type having a plurality of modular devices (A, B, C), each of which comprises:
— a support foot (1) connected to the fixed part (2)
— an element forming a support (6) for the mobile part (3),
— a retention element (8) permitting a locking configuration in which its free end ($8_A$) comes to bear upon a surface of the mobile part (3), facing and opposite to the support (6), which brings about the immobilization of the mobile part in a precise position, and also a retraction configuration which releases the mobile part,
— a trigger (11) articulated (13) on the foot (1) having the function of indirectly locking the retention element (8) in the locking configuration,
— a control device (12) for releasing the trigger (11) from its locking function, and
— means (17, 14, ε) for automatically causing the displacement of the retention member away from its locking configuration, this system being characterized in that, in each of the modular device (A, B, C), the element (6) forming the support is mobile, being articulated on one end (7) of a connecting rod forming a rocker (4) and articulated in its median section (5) onto the foot, while the retaining element is a stacking shackle (8) articulated on the other end (9) of the connecting rod (4), this connecting rod being capable of occupying either a locking position, in which it is locked by the trigger (11) and in which the shackle is in the locking configuration, or a release position, under the effect of the said means (14, 17, ε) for displacing the shackle, in which the shackle and the mobile support are both in a position of retraction, thus permitting the mobile part (2) to oscillate on either side of its position of immobilization.

2. System according to Claim 1, characterised by the fact that the means for automatically causing the connecting rod to pivot from its locking position into its release position are formed by a tensioning screw (14) mounted on the free end ($8_A$) of the stacking shackle (8) and coming to bear on the mobile part (3), providing a prestress, combined with a shift ($\varepsilon$) of the axis of articulation (9) of the shackle (8) on the connecting rod (4) relative to the axis of articulation (5) of the connecting rod (4) on the foot (1), these means ensuring the auto-reversibility of the system and advantageously being completed by an elastic restoring system (17) for restoring the connecting rod (4) towards its release position.

3. System according to either of Claims 1 or 2, characterized by the fact that the control device for releasing the trigger (11) from its locking function is formed by a stacking cable (12) having a restoring spring (20, 21) and a pyrotechnic control cutter (19).

4. System according to any one of Claims 1 to 3, characterized by the fact that the system possesses at least three modular devices (A, B, C) distributed at the apex of a triangle whose mobile supports (6) define a support plane for the mobile part (3), the triggers (11) of the modular devices being held in the locking position by a common stacking cable (12) whose free ends are subject to restoring springs (20, 21) and possessing a pyrotechnic control cutter (19).

5. System according to either of Claims 3 and 4, characterized in that, with a view to limiting the stresses induced in the stacking cable (12) controlling the triggers (11), a mechanical switch (34) producing a stepping-down effect is provided between the connecting rod (4) and the trigger (11) of each device.

6. System according to Claim 5, characterized by the fact that the mechanical switch is formed by a locking lever in the form of an angle iron (35) articulated (36) on the foot ($1_A$) and connected by a linking bar (37) to the connecting rod (4), the trigger (11) bearing against the free end of the locking lever (35), while a stop screw (40) makes it possible to ensure control of the reversibility of the system.

7. System according to Claim 4, characterized by the fact that three retention devices (A, B, C) are provided which ensure the transmission of forces into the retention plane by virtue of the fact that one of the three points possesses a conical pin (26) in the mobile part (3), the seating (27) of which pin is made on the corresponding mobile support (6), a second of the three points possesses a tenon (28) on the mobile part (3) accommodated in a slide (29) made in the corresponding mobile support (6) the axis (XX) of which passes through the centre of the conical pin (26), and the third point possesses a simple support of the mobile part (3) on the corresponding mobile support (6).

8. System according to Claim 4, characterized by the fact that a number of support points greater than three is provided and that the transmission of forces in the plane of retention is provided by friction, the mobile part (3) and the corresponding mobile support (6) possessing for this purpose a rough surface (31, 32) and the contact being obtained by means of an intermediate metal wedge (33), whose malleability can be determined as required.

FIG.1

FIG.2

FIG.3

FIG.4

2

FIG.5

FIG.6  FIG.7  FIG.8

FIG. 9

FIG. 12

FIG.10

FIG.11